Europäisches Patentamt

European Patent Office

Office européen des brevets

(19)

(11) Veröffentlichungsnummer: **0 254 196 B1**

(12) # EUROPÄISCHE PATENTSCHRIFT

(45) Veröffentlichungstag der Patentschrift: **16.09.92**

(21) Anmeldenummer: **87110204.2**

(22) Anmeldetag: **15.07.87**

(51) Int. Cl.5: **A01N 25/34**

(54) Vorrichtung zur transcuticularen Applikation von Wirkstoffen an Pflanzen.

(30) Priorität: **17.07.86 DE 3624074**

(43) Veröffentlichungstag der Anmeldung:
**27.01.88 Patentblatt 88/04**

(45) Bekanntmachung des Hinweises auf die
Patenterteilung:
**16.09.92 Patentblatt 92/38**

(84) Benannte Vertragsstaaten:
**AT BE CH DE ES FR GB GR IT LI LU NL SE**

(56) Entgegenhaltungen:
**FR-A- 2 449 664**

(73) Patentinhaber: **CELAFLOR GmbH
Konrad-Adenauer-Strasse 30
W-6507 Ingelheim am Rhein(DE)**

(72) Erfinder: **Itzel, Hanshelmut, Dr.
Im Herzenacker 51
W-6535 Gau-Algesheim(DE)**
Erfinder: **Zierenberg, Bernd, Dr.
Goethestrasse 1
W-6530 Bingen(DE)**
Erfinder: **Drandarevski, Christo, Dr.
Boehringerstrasse 8
W-6507 Ingelheim am Rhein(DE)**
Erfinder: **Heupt, Wilfried, Dr.
Bousermühle 1
W-5509 Malborn(DE)**

(74) Vertreter: **Brachotte, Charles et al
RHONE-POULENC AGROCHIMIE 14-20, Rue
Pierre Baizet B.P. 9163
F-69263 Lyon Cedex 09(FR)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zur transcuticularen Application eines systemischen Wirkstoffes bei Pflanzen unter Abgabe exakt dosierter Wirkstoffmengen sowie die Verwendung dieser Vorrichtung für den Pflanzenschutz.

Im Pflanzenschutzbereich ist es bekannt, Wirkstoffe durch Spritzen oder Bestäuben entsprechender wirkstoffhaltiger Zubereitungen auf die Pflanzen aufzubringen. Der Wirkstoff wirkt hierbei entweder durch direkten Kontakt oder aber auch systemisch, d.h. er wird von der Pflanze über die Kutikula der Pflanzenblätter aufgenommen.

Die bisher praktizierten Anwendungsverfahren weisen entscheidende Nachteile auf. Zum einen besteht ein deutliches Mißverhältnis zwischen der zur Erzielung eines positiven Effekts benötigten Menge an Wirkstoff auf oder in der Pflanze und der tatsächlich durch Spritzen oder Bestäuben aufgewendeten Menge an Wirkstoff.

Zum anderen erfordert die Anwendung von Pflanzenschutzstoffen durch Spritzen oder Bestäuben Vorsichtsmaßregeln zur Vermeidung von Gesundheitsschädigungen der Anwesenden, die insbesondere im Haus- und Gartenbereich nicht immer eingehalten werden. Die Bevorratung größerer Mengen an Wirkstoffkonzentraten stellt eine zusätzliche Gefährdung dar. Weiterhin sind die Anwender, insbesondere im Haus- und Gartenbereich, zumeist überfordert, wenn es darum geht, die exakte Dosierung an Wirkstoff auf der Pflanze zu bestimmen. Dies betrifft nicht die Herstellung einer gebrauchsfertigen Lösung aus einem Wirkstoffkonzentrat, sondern die Menge an gebrauchsfertiger Lösung, die auf die Pflanze gesprüht wird. In den meisten Fällen wird zuviel oder zu wenig Wirkstofflösung aufgesprüht. Das Versprühen im Innenbereich hat den weiteren Nachteil, daß die nähere Umgebung der Pflanze ebenfalls mit Wirkstoff besprüht wird, was zur Folge hat, daß die Pflanzen im Idealfall im Freien behandelt werden müssen. Nicht aufgebrauchte Restmengen angesetzter Wirkstofflösungen können Probleme verursachen, wenn sie nicht ordnungsgemäß entsorgt werden.

Ein weiteres Problem beim Sprühen oder Bestäuben ist das Problem der Abdrift. In vielen Fällen ist es unerwünscht, daß benachbarte Pflanzen mit dem Wirkstoff in Kontakt kommen. Dies ist z.B. dann gegeben, wenn erntereifes Gemüse oder Früchte in Nachbarschaft stehen. Besonders unerwünscht ist die Abdrift bei der Anwendung systemisch wirkender Herbizide, z.B. bei der Queckenbekämpfung.

Ein weiterer Nachteil bisheriger Applikationsformen ist, daß es nach dem Aufbringen von Pflanzenschutzmitteln nicht mehr ohne weiteres feststellbar ist, mit welchem Wirkstoff die Pflanze behandelt wird.

Es ist die Aufgabe der vorliegenden Erfindung, eine Vorrichtung vorzuschlagen, die im Pflanzenschutzbereich das Verhältnis von benötigter zur aufgewendeten Wirkstoffmenge verbessert.

Es ist eine weitere Aufgabe, eine Vorrichtung vorzuschlagen, die die Sicherheit beim Umgang mit Wirkstoffen im Pflanzenschutzbereich erhöht.

Erfindungsgemäß wird die Aufgabe durch eine Vorrichtung zur transcutikularen Applikation eines systemischen Wirkstoffes bei Pflanzen gelöst, die aus einer wirkstoffundurchlässigen Rückschicht und einem wirkstoffhaltigen Träger in Form einer polymeren oder saugfähigen wirkstoffhaltigen Materialschicht besteht, welche Vorrichtung in solcher Weise geartet ist, daß sie mit der Pflanzenoberfläche mittels einer haftfähigen Deckschicht in Kontakt kommt, die sich über den wirkstoffhaltigen Träger erstreckt oder einen Teil davon bildet, und durch welche der Wirkstoff in die Pflanze abgegeben wird, und daß der Wirkstoff in der Vorrichtung in exakt dosierter Menge für die Pflanze dosiert ist.

Die erfindungsgemäße Vorrichtung wird in innigem Kontakt mit der Pflanze angebracht, so daß der systemische Wirkstoff über die Blatt- oder Stengelkutikula in die Pflanze gelangt und dort über den Stoffwechsel in der Pflanze verteilt wird.

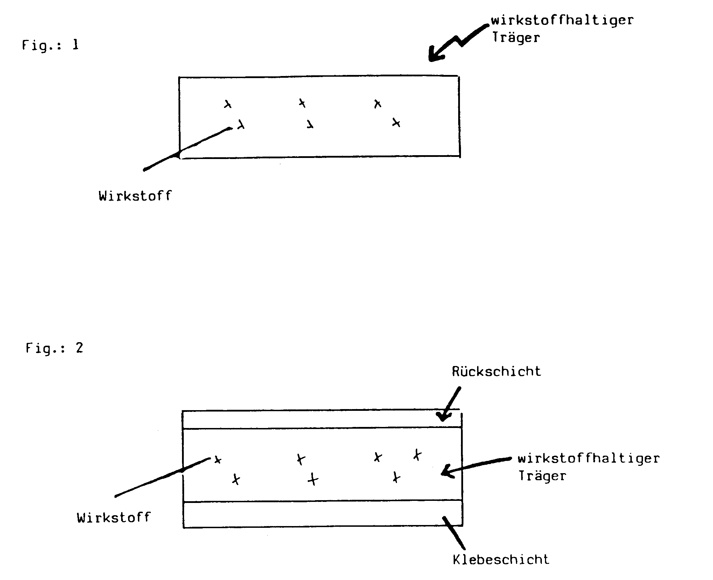

Wie in Fig.1 dargestellt, besteht die Vorrichtung aus einer Rückschicht, einem Wirkstoffreservoir in Form einer ein- oder mehrlagigen polymeren oder saugfähigen Materialschicht, welche den Wirkstoff enthält, und einer haftfähigen, vorzugsweise klebemittelhaltigen Deckschicht, die zweckmäßig mit einer abziehbaren Schutzschicht versehen ist.

Die wirkstoffundurchlässige Rückschicht schließt den Aufbau des Laminats an der der Pflanze abgewandten Seite ab. Geeignete Materialien zur Ausbildung der Rückschicht sind Polymere, wie z.B. PCV, oder dünne Metallfolien, z.B. aus Aluminium, die gegebenenfalls mit einem dünnen Polymerfilm überzogen sind. Die Rückschicht kann so eingefärbt werden, daß die Vorrichtung auf der Pflanze deutlich sichtbar ist.

In einer weiteren Ausführungsform kann die Rückschicht so ausgebildet sein, z.B. durch eine Metall- oder Textileinlage, daß sie als Stützschicht zur Stabilisierung des Laminats dient.

In einer besonderen Ausführungsform weist die Rückschicht eine größere Fläche als die anschließende wirkstoffhaltige Materialschicht auf und ist an ihrer Unterseite mit einem klebenden Material beschichtet. Dadurch dient sie gleichzeitig zur Befestigung des wirkstoffhaltigen Trägers an der Pflanze. Bei dieser Ausführungsform kann die separate Klebeschicht, wie in Fig.1 dargestellt, entfallen.

Der den Wirkstoff enthaltende Träger, welcher als Wirkstoffreservoir wirkt, kann aus einer oder mehreren Schichten bestehen, wobei nicht alle Schichten einen Wirkstoff enthalten müssen.

Ein mehrschichtiger Träger mit Schichten, welche unterschiedliche Wirkstoffe enthalten, bildet ein Depot aus Wirkstoffkombinationen. Die Schichten können außerdem Mittel enthalten, welche die Freisetzung des Wirkstoffes beschleunigen oder verzögern. Membranartige Schichten sind geeignet, die Wirkstofffreigabe zu steuern.

Geeignete Materialien für den Träger sind solche, die den Wirkstoff in gelöster, suspendierter oder fester Form speichern können, wie z.B. Papier, textile Fasern, anorganische poröse Materialien, wie z.B. Silikate und Carbonate, gegebenenfalls mit Bindemitteln versetzt, oder Polymere. Bevorzugte Trägermaterialien sind Papier und Polymere.

In einer besonderen Ausführungsform kann die Unterseite des Trägers mit mikrofeinen Fasern besetzt sein, die in die äußere Zellschicht der Pflanze eindringen und so die Wirkstoffaufnahme verbessern.

In einer anderen Ausführungsform ist die Unterseite des Trägers mit dem Wirkstoff in mikrokristalliner Form beschichtet.

In einer weiteren Ausführungsform ist die der Pflanze abgewandte Seite des Wirkstoffträgers zusätzlich wasserabweisend imprägniert. Hierdurch wird ein eventuelles Auswaschen bei stark wasserlöslichen Wirkstoffen vermieden. Die Imprägnierung kann beispielsweise durch Aufsprühen entsprechender, dem Fachmann bekannter Lösungen erfolgen.

In einer weiteren besonderen Ausführungsform besteht der Träger aus einem wirkstoffhaltigen selbstklebenden Polymer. Polymere geeigneter Zusammensetzung und Glastemperatur sind dem Fachmann bekannt. Zur besseren Handhabung eines solchen Wirkstoffträgers ist es vorteilhaft, wenn die Trägerrückseite mit einem nichtklebenden Material beschichtet ist.

Der Wirkstoff kann auch in Form von Mikrokapseln in einem Polymer eingebettet sein oder als Matrix vorliegen. Es ist weiterhin möglich, daß der Träger einen Hohlraum bildet, in dem der Wirkstoff vorliegt, z.B. in flüssiger Form.

Geeignete Polymere zur Ausbildung des Wirkstoffträgers sind beispielsweise Polyvinylalkohol, Polyvinylacetat, plastifiziertes Polyvinylchlorid, plastifiziertes Polyamid, Gelatine, Wachse, Polysaccharosen, Polymerisate von Monoestern von Olefinsäuren, z.B. Acrylsäure, Methacrylsäure, Polyhydroxyalkylacrylate oder Siliconkautschuke.

Besonders bevorzugt sind Emulsionspolymerisate, wie z.B. PVC, Polylactide, Polystyrol, Polyvinylacetate, Polybutadien, Polyacrylnitril, Polyvinylester, Polyvinylether und deren Copolymere.

Ganz besonders bevorzugt sind emulsionspolymerisierte Copolymerisate von Methyl- und/oder Ethylestern der Acryl- und Methacrylsäure.

Den Polymeren können Füllstoffe, wie z.B. Kieselsäure, zugesetzt sein.

An die Schicht des wirkstoffhaltigen Trägers grenzt eine Klebeschicht. Selbstklebende Polymere sind dem Fachmann bekannt. Durch Auswahl geeigneter Polymere kann die Zusammensetzung der Klebeschicht so gestaltet werden, daß sie die Freigaberate des Wirkstoffs aus der Trägerschicht kontrolliert. Neben ganzflächigen Klebeschichten sind auch ringförmige oder punktförmige Klebeflächen möglich. Ganzflächige Klebeflächen müssen in jedem Fall wirkstoffdurchlässig sein. Diese gesonderte Klebeschicht kann entfallen, wenn das Trägermaterial aus einem selbstklebenden Polymer besteht oder die vergrößerte Rückschicht gleichzeitig auf ihrer Unterseite eine klebende Schicht aufweist, welche die Wirkstoffschicht überlappt.

Zum Schutz weist der wirkstoffhaltige Träger im Anschluß an die Klebeschicht zweckmäßig eine abziehbare Schutzfolie auf; stattdessen kann die gesamte Vorrichtung auch in einer aufreißbaren Folie eingeschweißt sein. Dies ist besonders dann empfehlenswert, wenn es sich um leicht flüchtige Wirkstoffe handelt.

In einer weiteren Ausführungsform ist die erfindungsgemäße Vorrichtung in Form eines Aufklebers oder eines Etiketts ausgebildet. Die Rückseite der Vorrichtung ist hierbei so ausgebildet, daß sie beschriftbar ist. Sie besteht z.B. aus einem Material auf Papierbasis oder aus einem beschriftbaren Polymerfilm. Auf der Rückseite können beispielsweise wichtige Daten, wie das Aufbringungsdatum auf der Pflanze etc., eingetragen werden.

Es ist ebenfalls möglich, bereits beim Herstellungsverfahren der Vorrichtung wichtige Informationen, wie z.B. den verwendeten Wirkstoff, Haltbarkeitsdaten oder die Wirkungsdauer der Vorrichtung ab Anwendungsdatum aufzudrucken. Auch andere Kennzeichnungen, z.B. Farbcodes oder graphische Symbole, sind ohne weiteres aufzudrucken oder einzuprägen.

Hierdurch wird erstmals ein Pflanzenschutzmittel bereitgestellt, bei dem jeder Anwender, auch nach dem Aufbringen auf die Pflanze, erkennen kann, mit welchem Wirkstoff die Pflanze behandelt wird, ohne daß zusätzliche Protokolle geführt werden müssen.

Die erfindungsgemäße Vorrichtung ist zur transcuticularen Applikation dosierter Wirkstoffmengen bei Pflanzen aller Gattungen, insbesondere im Haus und Gartenbereich, geeignet.

Zweckmäßigerweise wird sie an Blättern oder Stengeln der Pflanzen angebracht, so daß ein inniger Kontakt zwischen Pflanze und Vorrichtung besteht und der Wirkstoff aus dem Träger in die Pflanze gelangt.

Die transcuticulare Applikation fungizider und/oder insektizider Wirkstoffe kann zur Schädlingsbekämpfung oder -prophylaxe angewandt werden. Besonders geeignet ist die erfindungsgemäße Vorrichtung zur herbiziden Einzelpflanzenbehandlung. Geeignete Wirkstoffe im Sinne der Erfindung sind Verbindungen, die aufgrund ihrer systemischen Wirkung eine fungizide, herbizide, insektizide und/oder akarizide Wirkung aufweisen. Geeignet sind aber auch solche Verbindungen, die im weiteren Sinn des Begriffs zur Ernhährung dienen, z.B. Spurenelemente, Düngemittel.

In besonderen Fällen können auch Wachstumsbeschleuniger- oder Wachstumshemmer oder Verbindungen, die die Reifegeschwindigkeit von Früchten beeinflussen, angewandt werden.

In den Tabellen 1 bis 4 sind die bevorzugten Wirkstoffe, die entweder einzeln oder in Kombination mit der erfindungsgemäßen Vorrichtung angewendet werden können, aufgelistet.

## SYSTEMISCHE Wirkstoffe

1. mit insektizider, akarizider und aphizider Wirkung Wirkstoff

Acephat
Aldicarb
Aldocycarb
Demeton
Demeton-S-m.
Dicrotophos
Dimefox
Dimethoat
Formothion
Methamidophos
Methomyl
Mevinphos
Monocrotophos
Morphothion
Omethoat
Oxamyl
Oxydemeton-m.
Phosphatidon
Prothoate
Thiometon
Vamidothion

2. mit aphizider Wirkung

Aphidan
Butocarboxim
Butoxycarboxim
Heptenophos

3. Systemische Fungizide

| | | |
|---|---|---|
| Benomyl | Fenarimol | Triadimefon |
| Benodanil | Fenpropimorph | Triadimenol |
| Kitazin | Fosetyl | Tridemorph |
| Bitertanol | Furalaxyl | Triforine |
| Carbendazim | Imazalil | |
| Carboxin | Metalaxyl | |
| Cyprofuram | Nuarimol | |
| Diclobutrazol | Oxycarboxin | |
| Dodemorph | Prochloraz | |
| Etaconazol | Propiconazol | |

4. Herbizide

| | | |
|---|---|---|
| Acifluorfen | Chlortoluron | Gibberelinsäure |
| Alachlor | 2,4-D | Glufosinate |
| Alloxydim | Dalapon | Glyphosate |
| Bentazon | 2,4-DE | Glyphosine |
| Bromoxynil | Dicamba | Ioxynil |
| Chlorfluorenol | Dichlorprop | MCPA |
| Chloridazon | Dichlofop | Mecoprop |
| Chlormequat | Diquat | Paraquat |
| Chloressigsäure | Fluazifop | Pyridate |
| Chlorsulfuron | Flurenol | Sulfometuron |

Die erfindungsgemäße Vorrichtung kann den Wirkstoff in Konzentrationen zwischen $10^{-6}$ und 200 mg, bevorzugt 0,01-100 mg, pro Vorrichtung enthalten. Die exakte Dosierung ist von verschiedenen Parametern, wie z.B. Art des Polymers, Art des Wirkstoffträgers, beabsichtigte Applikationsdauer, Dicke der Trägerschicht, abhängig und kann durch einfache Versuche ermittelt werden. Aufgrund der exakt vorgegebenen Wirkstoffmenge in der Vorrichtung ist es auch für den Nichtfachmann möglich, zur Erzielung des gewünschten Effekts die erforderliche Menge an Wirkstoff zu applizieren, ohne über- oder unterzudosieren. Dies ist durch einfaches Sprühen oder Bestäuben nicht immer gewährleistet.

Die Größe der Kontaktfläche der Vorrichtung ist nicht kritisch, sollte jedoch so bemessen sein, daß sie nicht über die Pflanzenteile hinausragt, sie beträgt normalerweise 1 bis 20 cm². Die Dicke der Vorrichtung hängt von den verwendeten Materialien, dem Schichtaufbau, der Menge an Wirkstoff pro Flächeeinheit und der beabsichtigten pro Zeiteinheit zuzuführenden Menge an Wirkstoff ab. Im allgemeinen beträgt sie zwischen 5 μm und 200 μm, bevorzugt bis 100 μm, und sie kann durch Versuche leicht bestimmt werden.

Durch die Verwendung der erfindungsgemäßen Vorrichtung zur transcuticularen Applikation von systemischen Wirkstoffen zur Schädlingsbekämpfung ergeben sich zahlreiche Vorteile.

Die Wirkstoffe sind auf einem flächenmäßig eng begrenzten Gebiet in einem nach außen "abgeschlossenen" Depot auf der Pflanze fixiert und nicht, wie beim Bestäuben oder Spritzen unvermeidbar, gleichmäßig in der näheren Umgebung verteilt.

Ein unbeabsichtigter Kontakt mit dem Wirkstoff ist nahezu ausgeschlossen. Bei der Anwendung sind keine Schutzmaßnahmen (z.B. Atemschutz) notwendig. Nach Beendigung der Behandlung können unverbrauchte Wirkstoffreste relativ problemlos durch Ablösen des Wirkstoffdepots einer ordnungsgemäßen Entsorgung zugeführt werden. Nutzinsekten (z.B. Bienen) sind weder bei der Ausbringung ihres Wirkstoffes noch während der Behandlungsdauer gefährdet.

Der Wirkstoff ist in der Vorrichtung vor äußeren Einflüssen, wie UV-Strahlung, Auswaschung durch Regen, wirksam geschützt. Hierdurch bedingt, ist eine prophylaktische Langzeitbehandlung der Pflanzen wesentlich unproblematischer als nach herkömmlichen Methoden. Auch ist der Einsatz empfindlicher Wirkstoffe erleichtert.

Die effektiv aufgewendete Wirkstoffmenge ist im Vergleich zum Bestäuben oder Spritzen drastisch vermindert. Unbeabsichtigter Kontakt mit dem Wirkstoff ist aufgrund der relativ starken Fixierung des Wirkstoffes in der Trägerschicht,auch bei direktem Kontakt mit derselben, im Vergleich zu herkömmlichen Anwendungsformen nicht gefährlich.

Die erfindungsgemäße Vorrichtung kann beispielsweise nach folgenden Verfahren hergestellt werden.

Der Wirkstoff wird zusammen mit dem Polymer und gegebenenfalls Zusatzstoffen in einem leichtflüchtigen organischen Lösungsmittel gelöst bzw. suspendiert, anschließend zu einem Film vorbestimmter Dicke ausgegossen und getrocknet. Die so erhaltene Trägerschicht kann anschließend mit einer Rückschicht, einer Klebeschicht und einem Schutzüberzug versehen und konfektioniert werden.

Besteht das Trägermaterial aus einem saugfähigen Material, wie z.B. Papier, läßt sich das Wirkstoffreservoir durch einfaches Sättigen mit einer Wirkstofflösung herstellen; dies kann beispielsweise durch Tauchen oder Sprühen erfolgen.

Der Wirkstoff kann auch nach bekannten Druckverfahren auf das Trägermaterial aufgedruckt werden, so z.B. auf ein Polymer oder bevorzugt auf Papier.

Ein mit Wirkstoff beladener Träger (z.B. Papier) kann mit einer auf der Unterseite klebrigen Rückschicht versehen werden. Nach dem Aufbringen einer abziehbaren Schutzfolie wird das erhaltene Laminat auf die gewünschte Größe zugeschnitten.

In einer weiteren Ausführungsform wird der Wirkstoffträger mit einem klebenden Deckpflaster auf der Pflanze befestigt.

Wirkstoffhaltige Träger, die auf ihrer Unterseite eine feinkristalline Wirkstoffschicht aufweisen, können durch einfaches Aufbringen des feinkristallinen Wirkstoffs auf ein klebriges Trägermaterial hergestellt werden.

A) Herstellung der erfindungsgemäßen Vorrichtung

Zusammensetzung des wirkstoffhaltigen Trägers

Beispiel 1

| | |
|---|---|
| 14,8 g<br>5,2 g | Eudragit® E 30 D<br>Dimethoat |
| 20,0 g<br>80,0 g | Feststoff<br>Aceton |
| 100 g | Lösung |

Das Polymer wird zusammen mit dem Wirkstoff in Aceton gelöst und anschließend zu einem Film auf eine Trägerfolie (12 $\mu$m) ausgegossen. Nach dem Trocknen beträgt die Gesamtdicke ca. 100 $\mu$m.

Beispiel 2

Zusammensetzung:

| | |
|---|---|
| 13,8 g<br>1,0 g<br>5,2 g | Endragit® E 30 D<br>Isopropylmyristat<br>Dimethoat |
| 20,0 g<br>80,0 g | Feststoff<br>Aceton |
| 100,0 g | Lösung |

Die Aufarbeitung erfolgt wie im Versuch 1 beschrieben; in diesem Fall ist die Klebeschicht selbstklebend.

B) Biologische Prüfung

1. Material und Methoden

1.1 Präparate

Die Vorrichtungen (rund, ca. 5 cm$^2$) sind wie folgt charakterisiert:

| Charge | Dimethoat Konz. mg/cm$^2$ | Dicke der Trägerfolie $\mu$m | Dicke der Klebeschicht $\mu$m |
|--------|---------------------------|------------------------------|-------------------------------|
| 1 | ca. 2,5 | 12 | ca. 80 |
| 2 | ca. 0,5 | 12 | ca. 40 |
| 3 | ca. 0,5 | 12 | ca. 80 |

1.2 Versuchsdurchführung

Die Applikation der Vorrichtung erfolgt durch leichtes Andrücken;
auf der Blattoberseite der untersten Blattregion;
auf der Blattunterseite der untersten Blattregion;
am Stengel bzw. Blattstiel.

Bei dem ersten Versuchsansatz an Vicia-Pflanzen wird eine einzige Vorrichtung pro Pflanze oder Blatt appliziert. Bei dem zweiten Versuchsansatz an Zierpflanzen wurden z.T. 1 - 4 Vorrichtungen / Pflanze, Blattstiel verwendet.

Die Besiedlung mit Aphis fabae erfolgte anschließend nach der Applikation mittels Näpfchen mit ca. 50 Blattläusen, und zwar immer auf der obersten Blattregion, entsprechend auf der anderen, nicht behandelten Blattseite. Bei Stengelapplikation erfolgte die Besiedlung auf der obersten Blattetage (s. unten)

Die Auswertung erfolgt durch Auszählen der toten und lebenden Blattläuse (Wiedergabe in % der Mortalität bzw. Wirkung) bei Vicia nach 1, 2 und z.T. 4 Tagen. Bei dem zweiten Versuchsansatz an Zierpflanzen erfolgt die Auswertung 7 Tage nach der Applikation.

2. Ergebnisse

Die Versuchsergebnisse aus dem ersten Versuchsansatz an Vicia-Pflanzen sind in der Tabelle 5 zusammengestellt.

Hieraus ist ersichtlich, daß eine translaminare sowie eine systemische Wirkung von Dimethoat bei dieser Applikationsart entfaltet wird. Die Wirkung ist dosierungsabhängig.

Weiterhin wird festgestellt, daß bei der Stengel-Applikation die höchsten Wirkungsraten erzielt werden. Die Pflanzenverträglichkeit ist abhängig von Dosierung und Applikationsort, wobei der letztere Faktor bestimmend ist. Zum Beispiel ist dort, wo starker Abtransport von Dimethoat stattfindet, nämlich am Stengel, auch bei der höheren Dosierung keine Phytotoxizität zu beobachten.

Tabelle 5

| Charge | Applikationsstelle | Auswertung nach der Applikation/Besiedlung | | | | | |
|---|---|---|---|---|---|---|---|
| | | 1. Tag | | 2. Tag | | 4. Tag | |
| | | % W. | % Phyt. | % W. | % Phyt. | % W. | % Phyt. |
| 1 | Stengel | 82 | 0 | 100 | 0 | 100 | 0 |
| 2 | | 45 | 0 | 76 | 0 | - | - |
| 3 | | 35 | 0 | 54 | 0 | - | - |
| 1 | Blattoberseite | 37 | 7 | 25 | 20 | 65 | 15 |
| 2 | | 5 | 0 | 11 | 0 | - | - |
| 3 | | 7 | 0 | 10 | 0 | - | - |
| 1 | Blattunterseite | 20 | 3 | 33 | 15 | 39 | 25 |
| 2 | | 6 | 0 | 7 | 0 | - | - |
| 3 | | 4 | 0 | 8 | 6 | - | - |

Table title: Wirkung (in %) und Verträglichkeit (Phytotoxizität in %) der Pflanzenpflaster gegen Aphis fabae nach Applikation an verschiedenen Stellen und in Abhängigkeit von der Zeit

Versuche zur herbiziden Wirkung

1 mg Glyphosate einer erfindungsgemäßen Vorrichtung in Form eines Blättchens auf Papierbasis (Größe 3 cm$^2$)

Versuchsobjekt

Quecken in Kultur von Cotoneaster

Versuchsdurchführung

Je eine Vorrichtung wird an einem Blatt je Quecke befestigt. Nach 3 Wochen wird der Zustand der Quecken beurteilt.

| | % abgestorbene Quecken |
|---|---|
| behandelt | 100 % |
| unbehandelt | 0 % |

Phytotoxis an Cotoneaster wurde nicht beobachtet.

Wirksamkeit gegen Spinnmilben

Objekt: Spinnmilben an Hibiskus im Topf

Versuchsdurchführung

Je 2 Hibiskuspflanzen werden unter verschiedenen räumlichen Bedingungen nebeneinandergestellt. Der natürliche Befall an Spinnmilben wurde abgewartet. Danach wurde je eine Pflanze mit je einer Vorrichtung Ø 5 cm, enthaltend 10 mg Dimethoat, behandelt.
Nach einer Woche und nach zwei Wochen wurde die Wirkung bonitiert (Wirkung %).

| | Stengel-applikation | Applikation Blattunterseite | Applikation Blattoberseite |
|---|---|---|---|
| unbehandelt | - | 0% (nach 1 1/2 Wochen waren Pflanzen abgestorben) | |
| behandelt | | | |
| 1. Woche | 80 | 70 | 75 |
| 2. Woche | 100 | 90 | 92 |

**Patentansprüche**

1. Vorrichtung zur transcuticularen Application eines systemischen Wirkstoffes bei Pflanzen, die aus einer wirkstoffundurchlässigen Rückschicht und einem wirkstoffhaltigen Träger in Form einer polymeren oder saugfähigen wirkstoffhaltigen Materialschicht besteht, welche Vorrichtung in solcher Weise geartet ist, daß sie mit der Pflanzenoberfläche mittels einer haftfähigen Deckschicht in Kontakt kommt, die sich über den wirkstoffhaltigen Träger erstreckt oder einen Teil davon bildet, und durch welche der Wirkstoff in die Pflanze abgegeben wird, und daß der Wirkstoff in der Vorrichtung in exakt dosierter Menge für die Pflanze dosiert ist.

2. Verwendung für den Pflanzenschutz durch transcuticulare Applikation eines systemischen Wirkstoffes bei Pflanzen von einer Vorrichtung, die aus einer wirkstoffundurchlässigen Rückschicht und einem wirkstoffhaltigen Träger in Form einer polymeren oder saugfähigen wirkstoffhaltigen Materialschicht besteht, welche Vorrichtung in solcher Weise geartet ist, daß sie mit der Pflanzenoberfläche mittels einer haftfähigen Deckschicht in Kontakt kommt, die sich über den wirkstoffhaltigen Träger erstreckt oder einen Teil davon bildet, und durch welche Wirkstoff in die Pflanze abgegeben wird.

**Claims**

1. Device for the transcuticular application of a systemic active compound to plants, which consists of a backing layer which is impermeable to the active compound and a carrier which contains the active compound and is in the form of a polymeric or absorbent layer of material containing the active compound, which device is constructed such that it comes into contact with the surface of the plant by means of an adhesive covering layer which extends over the carrier containing the active compound or forms a part thereof and through which the active compound is released into the plant, and such that the active compound is metered in the device in the exactly metered amount for the plant.

2. Use, for plant protection by transcuticular application of a systemic active compound to plants, of a device which consists of a backing layer which is impermeable to the active compound and a carrier which contains the active compound and is in the form of a polymeric or absorbent layer of material containing the active compound, which device is constructed such that it comes into contact with the surface of the plant by means of an adhesive covering layer which extends over the carrier containing the active compound or forms a part thereof, and through which the active compound is released into the plant.

**Revendications**

1. Dispositif d'application transcuticulaire d'une substance active systémique à des plantes, qui est constitué d'une couche arrière imperméable à la substance active et d'un support contenant la substance active, sous forme d'une couche de matière polymérique ou absorbante contenant la substance active, dispositif qui est caractérisé en ce qu'il entre en contact avec la surface de la plante au moyen d'une couche couvrante pouvant adhérer, qui s'étend sur le support contenant la substance active ou qui forme une partie de ce support, et par laquelle la substance active est cédée à la plante, et en ce que la substance active est dosée dans le dispositif en quantité exactement dosée pour la plante.

2. Utilisation pour la protection des plantes, par application transcuticulaire d'une substance active systémique à des plantes, d'un dispositif qui est constitué d'une couche arrière imperméable à la substance active et d'un support contenant la substance active sous forme d'une couche de matière polymère ou absorbante contenant la substance active, ce dispositif étant de nature telle qu'il entre en contact avec la surface de la plante au moyen d'une couche adhésive de recouvrement qui s'étend sur le support contenant la substance active ou forme une partie de ce support et à travers laquelle la substance active est cédée à la plante.

Fig.: 1

wirkstoffhaltiger
Träger

Wirkstoff

Fig.: 2

Rückschicht

wirkstoffhaltiger
Träger

Wirkstoff

Klebeschicht